# FASCICULE DE BREVET EUROPEEN

(11) **EP 3 185 189 B1**
(45) Date de publication et mention de la délivrance du brevet: **26.04.2023**
(21) Numéro de dépôt: 15290328.2
(22) Date de dépôt: 21.12.2015
(51) Int. Cl.: G06Q 10/06, G07B 15/00, G07F 15/00

(54) **PROCÉDÉ ET SYSTÈME DE FOURNITURE DE SERVICE AVEC VÉRIFICATION DE L'ADÉQUATION ENTRE UN VÉHICULE RECEVEUR DU SERVICE ET UN UTILISATEUR DU SERVICE**
VERFAHREN UND SYSTEM ZUR ERBRINGUNG EINES DIENSTES MIT ÜBERPRÜFUNG DER ÜBEREINSTIMMUNG ZWISCHEN EINEM FAHRZEUG, DAS DIESEN DIENST EMPFÄNGT, UND EINEM NUTZER DES DIENSTES
METHOD AND SYSTEM FOR PROVIDING SERVICE WITH VERIFICATION OF THE SUITABILITY BETWEEN A VEHICLE RECEIVING THE SERVICE AND A USER

(43) Date de publication de la demande: 28.06.2017
(73) Titulaire: Revenue Collection Systems France SAS, 91220 Plessis-Pâté (FR)
(72) Inventeur: Chamaillard, Guy, 91229 Bretigny sur Orge Cedex (FR); D'Athis, Thierry, 91229 Bretigny sur Orge Cedex (FR)
(74) Mandataire: Lavoix

(56) Documents cités:
- WO-A1-01/90514
- WO-A1-2010/036471
- WO-A2-2011/109460
- US-A1- 2010 010 698
- US-A1- 2014 085 110
- US-A1- 2014 160 280
- US-A1- 2014 371 962

## Description

La présente invention concerne un procédé de fourniture d'un service par un équipement fournisseur de service à un véhicule receveur dudit service, sous l'injonction d'un utilisateur du service. L'invention concerne également un système de fourniture de service correspondant.

La fourniture de services à destination de véhicules, en particulier de véhicules automobiles, est connue. Les services dont peuvent ainsi bénéficier les véhicules sont nombreux et incluent notamment l'accès à des réseaux routiers, la maintenance du véhicule, ou le rechargement du véhicule avec une source d'énergie, telle qu'un carburant ou de l'électricité, destinée à l'alimentation en énergie du moteur du véhicule.

La fourniture de ce service se fait généralement sous l'injonction d'un utilisateur du service, qui est le plus souvent le propriétaire du véhicule mais peut également être un individu autorisé ou mandaté par le propriétaire du véhicule pour utiliser ce service. Cet utilisateur s'identifie communément auprès du fournisseur de service au moyen d'un identifiant d'utilisateur qui va permettre au fournisseur de service de déterminer quelle est la personne (physique ou morale) à qui la fourniture de service doit être facturée. Cet identifiant d'utilisateur se présente le plus souvent sous la forme d'un code mémorisé sur un support de données, tel qu'une carte, porté par l'utilisateur. La reconnaissance de l'identifiant d'utilisateur par le fournisseur de service suffit généralement à déclencher la fourniture du service

Un exemple de fourniture de service de ce type est donné par US 2009/0313174. Un autre exemple de fourniture de service est décrit dans le document US 2014/085110 A1.

Un inconvénient des systèmes de fourniture de service existants est qu'ils sont largement sujets aux tentatives de fraude, parmi lesquelles :
- la duplication du support de données par un tiers qui utilise alors le duplicata pour faire facturer au propriétaire de l'original des services fournis à son propre véhicule,
- le vol de véhicule, le voleur pouvant sans peine utiliser ses propres identifiants pour obtenir la fourniture de services à un véhicule qu'il a dérobé,
- l'utilisation, par un particulier salarié bénéficiant d'un prêt de véhicule par son entreprise, d'un identifiant d'utilisateur normalement réservé à la fourniture de services destinés au véhicule d'entreprise pour demander la fourniture de services destinés à un véhicule privé du particulier salarié.

Un objectif de l'invention est de limiter les risques de fraude auxquels sont sujets les systèmes de fournitures de service destinés à des véhicules.

A cet effet, l'invention a pour objet un procédé conforme à la revendication 1.

Des modes de réalisation particuliers du procédé précité sont présentés dans les revendications 2 à 8, 15 et 16.

L'invention a également pour objet un système de fourniture de service conforme à la revendication 9.

Des modes de réalisation particuliers du système précité sont présentés dans les revendications 10 à 16.

D'autres caractéristiques et avantages de l'invention apparaîtront à la lecture de la description qui va suivre, donnée uniquement à titre d'exemple et faite en se référant aux dessins annexés, parmi lesquels :
- la Figure 1 est une vue schématique d'ensemble d'un système de fourniture de service selon l'invention, avec un utilisateur de ce service et un véhicule receveur de ce service,
- la Figure 2 est une représentation schématique des données contenues dans la mémoire d'un support de données du système de fourniture de service de la Figure 1,
- la Figure 3 est une vue schématique d'un serveur distant du système de fourniture de service de la Figure 1,
- la Figure 4 est une vue schématique d'un équipement fournisseur de service du système de fourniture de service de la Figure 1,
- la Figure 5 est un schéma-blocs illustrant un procédé de fourniture de service mis en oeuvre par le système de fourniture de service de la Figure 1, et
- la Figure 6 est un schéma-blocs illustrant un procédé anti-vandalisme mis en oeuvre par le système de fourniture de service de la Figure 1.

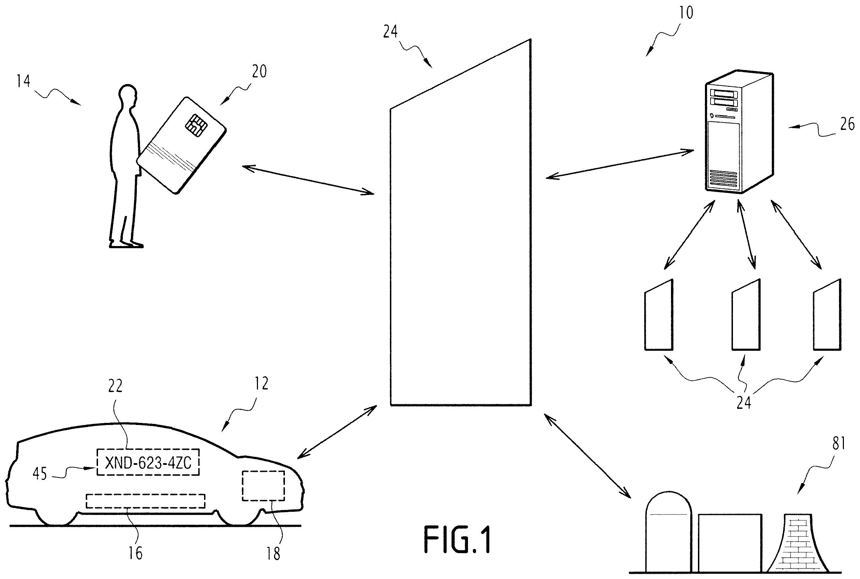

Le système de fourniture de service 10 représenté sur la Figure 1 est destiné à fournir un service à un véhicule 12 receveur de ce service, typiquement un véhicule automobile, sur l'injonction d'un individu 14 utilisateur de ce service.

Ce service consiste de préférence en un rechargement d'un dispositif de stockage 16 du véhicule 12 avec une source d'énergie destinée à l'alimentation en énergie d'un moteur 18 du véhicule 12. Dans l'exemple représenté, le véhicule 12 est un véhicule électrique dont le dispositif de stockage 16 est un accumulateur électrique et le moteur 18 est un moteur électrique, et la source d'énergie est de l'énergie électrique. En variante, le véhicule 12 est un véhicule à carburant dont le dispositif de stockage 16 est un réservoir à carburant et le moteur 18 est un moteur thermique, la source d'énergie étant alors un carburant. Tout autre type de source d'énergie et de dispositif de stockage d'énergie sont également envisageables.

En option, le service comprend, en plus du rechargement du dispositif de stockage 16, la fourniture au véhicule 12 d'un accès à un réseau routier à accès contrôlé (non représenté). En variante, le service est constitué par la fourniture d'un accès du véhicule 12 à un réseau routier à accès contrôlé. On notera que, par "réseau routier à accès contrôlé" on entend toute surface de circulation ou de stationnement pour véhicule automobile, y compris les parkings, les ouvrages d'art, les sites d'entreprises, les wagons de ferroutage, les ferries pour véhicules automobiles, etc. soumis à un contrôle d'accès, que ce contrôle d'accès soit lié à une tarification ou non.

Le système 10 comprend, en référence à la Figure 1, un premier support de données 20, destiné à l'identification de l'utilisateur 14, un deuxième support de données 22, destiné à l'identification du véhicule 12, une pluralité d'équipements fournisseurs de service 24, et un serveur distant 26. Les équipements fournisseurs de service 24 sont de préférence tous adaptés pour fournir un service identique au service fourni par les autres équipements fournisseurs de service 24 ; en variante, certains des équipements fournisseurs de service 24 sont adaptés pour fournir un premier service, tel que le rechargement de véhicules avec une source d'énergie destinée à l'alimentation en énergie d'un moteur de ces véhicules, et d'autres équipements fournisseurs de service 24 sont adaptés pour fournir un deuxième service, tel que la fourniture à des véhicules d'un accès à un réseau routier à accès contrôlé.

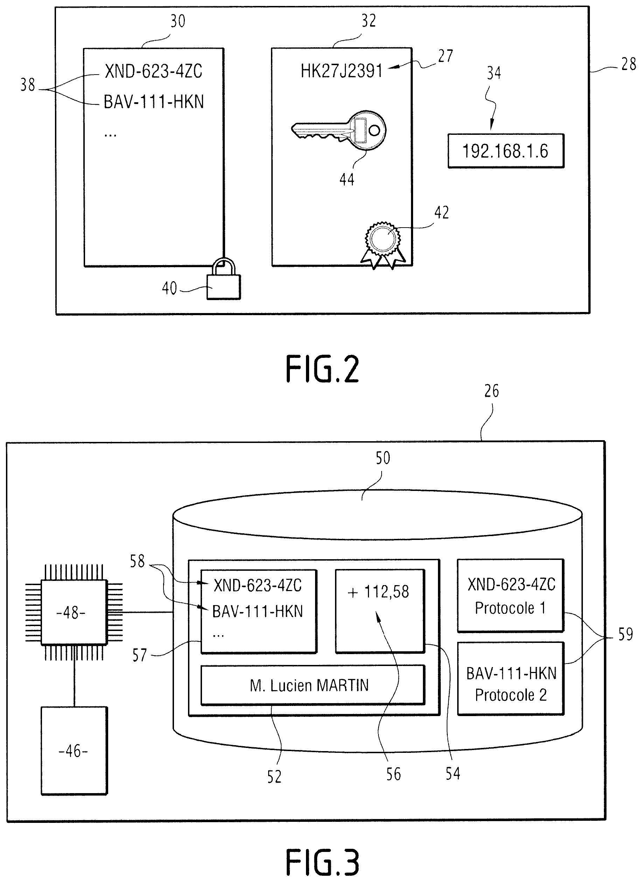

Le premier support de données 20 porte un identifiant d'utilisateur 27 (Figure 2) pour permettre l'identification de l'utilisateur 14 par chacun des équipements fournisseurs de service 24. En variante non revendiquée, le système 10 ne comprend pas le premier support de données 20, et l'identifiant d'utilisateur est alors constitué par un code PIN ou une donnée biométrique de l'utilisateur 14.

Le premier support de données 20 est typiquement constitué par une carte à puce, par exemple une carte à puce sans contact, ou par un composant NFC, un smartphone ou une tablette. Le premier support de données 20 comprend alors une mémoire 28 dont le contenu est illustré en Figure 2.

En variante (non représentée), le premier support de données 20 est constitué par un support, tel qu'une carte ou une feuille, portant une représentation graphique, par exemple un hologramme, une chaîne de caractères ou un code-barres, tel qu'un Flash Code ^{®} ou un Aztek ^{®}, ladite représentation graphique codant les données portées par le premier support de données 20.

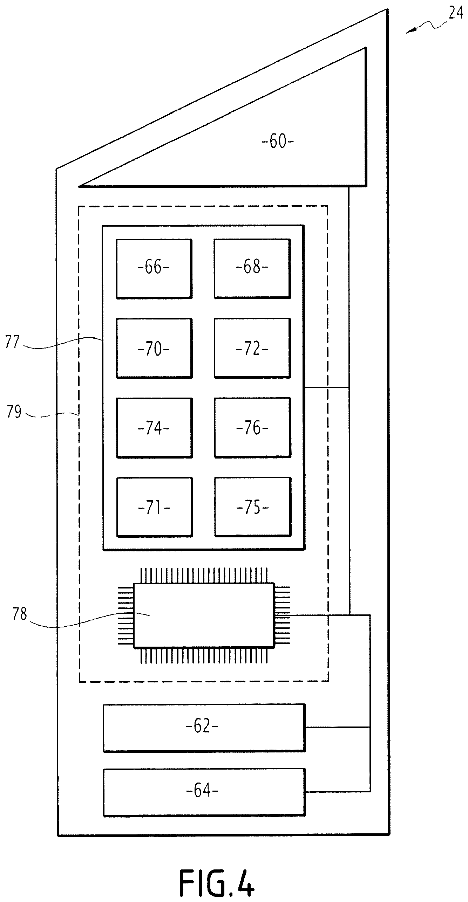

En référence à la Figure 2, les données portées par le support 20 comprennent une liste locale de véhicules autorisés 30, un certificat numérique 32 et une adresse 34 d'un compte utilisateur 36 (Figure 4) stocké sur le serveur distant 26.

La liste locale de véhicules autorisés 30 contient au moins un identifiant de véhicule autorisé local 38. Elle est chiffrée au moyen d'une clé privée 40.

Le certificat numérique 32 permet au support de données 20 de s'authentifier auprès de l'équipement fournisseur de service 24 ; à cet effet, le support de données 20 contient, de façon connue, une signature 42 d'une autorité de certification (non représentée) reconnue par l'équipement fournisseur de service 24, et un identifiant unique qui constitue ici l'identifiant d'utilisateur 27. Le certificat numérique 32 contient également une clé publique 44 permettant le déchiffrage de la liste locale de véhicules autorisés 30, conformément aux recommandations PKCS de RSA Laboratories.

De retour à la Figure 1, le deuxième support de données 22 porte un identifiant de véhicule 45 pour permettre l'identification du véhicule 12 par l'équipement fournisseur de service 24. A cet effet, le deuxième support de données 22 est typiquement constitué par un ordinateur de bord du véhicule 12, l'identifiant de véhicule 45 étant mémorisé dans une mémoire morte (non représentée) de l'ordinateur de bord.

L'identifiant de véhicule 45 est de préférence un identifiant unique du véhicule 12. A cet effet, l'identifiant de véhicule 45 est typiquement constitué par le numéro d'identification de véhicule (ou code « VIN », de l'anglais « Vehicle Identification Number ») du véhicule 12.

Le deuxième support de données 22 est adapté pour communiquer avec l'équipement fournisseur de service 24, typiquement par communication sans fil ou par courant porteur de ligne.

En référence à la Figure 3, le serveur distant 26 comprend un dispositif de communication 46, adapté pour permettre les échanges de données entre le serveur 26 et l'équipement fournisseur de service 24, un calculateur 48, et une mémoire 50.

La mémoire 50 stocke une pluralité de comptes utilisateur 36, dont le compte utilisateur dont l'adresse 34 est portée par le premier support de données 20. Chaque compte utilisateur 36 contient, de manière connue, un répertoire d'informations personnelles 52 dans lequel sont stockées des informations personnelles relatives au titulaire du compte, telles que son nom et son adresse, et un répertoire comptable 54 dans lequel est typiquement mémorisé un solde de compte 56. Le compte utilisateur 36 contient également, selon l'invention, une liste distante de véhicules autorisés 57 contenant au moins un identifiant de véhicule autorisé distant 58.

La mémoire 50 stocke également une pluralité de fiches véhicule 59 associant chacune un protocole de charge à un identifiant de véhicule.

En référence à la Figure 4 maintenant, chaque équipement fournisseur de service 24 comprend un premier dispositif de lecture 60 pour lire le premier support de données 20, un deuxième dispositif de lecture 62 pour lire le deuxième support de données 22, et un dispositif 64 de fourniture du service au véhicule 12. L'équipement fournisseur de service 24 comprend également un dispositif 66 de détermination d'une identité du véhicule 12, un dispositif 68 de détermination d'une identité de l'utilisateur 14, un organe 70 de vérification de l'appartenance du véhicule 12 et de l'utilisateur 14 à une liste d'exclusion, un dispositif 71 de vérification de l'adéquation entre le véhicule 12 et un protocole de charge demandé, un système 72 de vérification de l'adéquation entre l'identité du véhicule 12 et l'identité de l'utilisateur 14, un système 74 de contrôle de transaction, un dispositif anti-vandalisme 75 et un organe 76 de mise en oeuvre de mesures anti-fraude.

Dans l'exemple de réalisation de l'invention, le dispositif de détermination 66, le dispositif de détermination 68, l'organe de vérification 70, le dispositif de vérification 71, le système de vérification 72, le système de contrôle de transaction 74, le dispositif de détection 75 et l'organe de mise en oeuvre de mesures anti-fraude 76 sont réalisés sous forme de logiciels stockés dans une mémoire 77 et aptes à être exécutés par un processeur 78 associé à la mémoire 77, le processeur 78 et la mémoire 77 formant une unité de traitement d'informations 79 incluse dans l'équipement fournisseur de service 24. En variante, le dispositif de détermination 66, le dispositif de détermination 68, l'organe de vérification 70, le dispositif de vérification 71, le système de vérification 72, le système de contrôle de transaction 74, le dispositif anti-vandalisme 75 et l'organe de mise en oeuvre de mesures anti-fraude 76 sont réalisés au moins partiellement sous forme de composants logiques programmables, ou encore sous forme de circuits intégrés dédiés, inclus dans l'équipement fournisseur de service 24.

Le premier dispositif de lecture 60 est configuré pour lire le premier support de données 20, par exemple par liaison sans fil lorsque le premier support de données 20 est constitué par une carte à puce sans contact, un composant NFC, un smartphone ou une tablette, ou au moyen d'un appareil de prise de vue couplé à un module de traitement d'image lorsque le premier support de données 20 est constitué par un support portant une représentation graphique des données portées par le premier support de données 20. De préférence, le premier dispositif de lecture 60 est également configuré pour écrire des données sur le premier support de données 20.

Le deuxième dispositif de lecture 62 est configuré pour lire le deuxième support de données 22, par exemple par liaison sans fil ou par courant porteur de ligne.

Le dispositif de fourniture de service 64 est adapté pour fournir le service au véhicule 12 lorsqu'il est activé. A cet effet, le dispositif de fourniture de service comprend typiquement un câble (non représenté) de raccordement de la batterie 16 du véhicule 12 à l'équipement fournisseur de service 24, et un interrupteur (non représenté) de raccordement du câble à un réseau 81 (Figure 1) de fourniture d'électricité, ledit interrupteur étant fermé si et seulement si le dispositif de fourniture de service 64 est activé. En variante (non représentée), lorsque le service consiste en la fourniture d'un accès à un réseau routier, le dispositif de fourniture de service 64 comprend typiquement un obstacle et un organe de commande de l'obstacle configuré pour déplacer l'obstacle dans une configuration de libération d'un passage d'accès au réseau routier lorsque le dispositif de fourniture de service 64 est activé et pour rétablir l'obstacle dans une configuration d'obturation d'un passage d'accès au réseau routier lorsque le dispositif de fourniture de service 64 est désactivé.

Le dispositif de détermination 66 est adapté pour lire les informations portées par le premier support de données 20, en particulier l'identifiant d'utilisateur 27, au moyen du premier dispositif de lecture 60, et pour en déduire l'identité de l'utilisateur 14.

Le dispositif de détermination 68 est adapté pour lire les informations portées par le deuxième support de données 22, en particulier l'identifiant de véhicule 45, au moyen du deuxième dispositif de lecture 62, et pour en déduire l'identité du véhicule 12.

L'organe de vérification 70 stocke une liste d'exclusion (non représentée) contenant au moins un identifiant exclu, et est configuré pour comparer les identifiants d'utilisateur 27 et de véhicule portés respectivement par le support de données 20 et par le support de données 22 avec le ou chaque identifiant exclu. L'organe de vérification 70 est également configuré pour activer le dispositif de vérification 71 lorsque les identifiants d'utilisateur et de véhicule sont différents de tous les identifiants exclus, et pour activer l'organe de mise en oeuvre de mesures anti-fraude 76 lorsqu'au moins un des identifiants d'utilisateur et de véhicule correspond à l'un des identifiants exclus.

Le dispositif de vérification 71 est configuré pour contrôler la disponibilité de la connexion entre l'équipement fournisseur de service 24 et le serveur distant 26. Le dispositif de vérification 71 est également configuré pour identifier un protocole de charge associé à l'identifiant de véhicule 45 lorsque la connexion est disponible ; à cet effet, le dispositif de vérification 71 est configuré pour consulter la fiche véhicule 59 stockée dans la mémoire 50 du serveur distant 26 qui mentionne ledit identifiant de véhicule 45 et lire le protocole associé par ladite fiche véhicule 59 à l'identifiant de véhicule 45. Le dispositif de vérification 71 est encore configuré pour détecter, au moyen du dispositif de fourniture de service 64, le protocole de charge demandé par le véhicule 12, et pour comparer ce protocole de charge demandé avec le protocole de charge associé à l'identifiant de véhicule 45. Le dispositif de vérification 71 est enfin configuré pour activer le système de vérification 72 lorsque le protocole de charge demandé par le véhicule 12 correspond au protocole de charge associé à l'identifiant de véhicule 45 ou lorsque la connexion au serveur distant 26 est indisponible, et pour activer l'organe de mise en oeuvre de mesures anti-fraude 76 lorsque le protocole de charge demandé par le véhicule 12 et le protocole de charge associé à l'identifiant de véhicule 45 ne correspondent pas l'un à l'autre.

Le système de vérification 72 est configuré pour contrôler la disponibilité de la connexion entre l'équipement fournisseur de service 24 et le serveur distant 26. Le système de vérification 72 est également configuré pour se connecter au compte utilisateur 36 désigné par l'adresse 34 portée par le premier support de données 20 lorsque la connexion est disponible, et pour comparer l'identifiant de véhicule 45 avec le ou chaque identifiant autorisé 58 mentionné dans la liste de véhicule autorisés distante 57 dudit compte utilisateur 36. Le système de vérification 72 est en outre configuré pour déchiffrer la liste de véhicules autorisés locale 30 portée par le premier support de données 20 au moyen de la clef publique 44 lorsque la connexion au serveur distant 26 est indisponible, et pour comparer l'identifiant de véhicule 45 avec le ou chaque identifiant autorisé 38 mentionné dans la liste de véhicule autorisés locale 30. Le système de vérification 72 est par ailleurs configuré pour activer le dispositif de fourniture de service 64 lorsque l'identifiant de véhicule 45 correspond à l'un des identifiants autorisés locaux ou distants 38, 58, et pour activer l'organe de mise en oeuvre de mesures anti-fraude 76 lorsque la connexion au serveur distant 26 est indisponible et l'identifiant de véhicule 45 est différent de chaque identifiant autorisé local 38, ou lorsque la connexion est disponible et l'identifiant de véhicule 45 est différent de chaque identifiant autorisé distant 58. Le système de vérification 72 est enfin configuré pour activer le système de contrôle de transaction 74 lorsque la connexion au serveur distant 26 est indisponible et l'identifiant de véhicule 45 correspond à l'un des identifiants autorisés locaux 38.

Le système de contrôle de transaction 74 est configuré pour mémoriser l'identifiant de véhicule 45 porté par le deuxième support de données 22, ainsi que l'adresse 34 portée par le premier support de données 20. Le système de contrôle de transaction 74 est également adapté pour se connecter au compte utilisateur 36 désigné par l'adresse 34 dès que la connexion entre l'équipement fournisseur d'énergie 24 et le serveur distant 26 est rétablie, et pour comparer l'identifiant de véhicule 45 avec chacun des identifiants autorisés 58 mentionnés dans la liste de véhicule autorisés distante 57 dudit compte utilisateur 36. Le système de contrôle de transaction 74 est enfin configuré pour activer l'organe de mise en oeuvre de mesures anti-fraude 76 lorsque l'identifiant de véhicule 45 est différent de chacun desdits identifiants autorisés distants 58.

Le dispositif anti-vandalisme 75 est configuré pour détecter une tentative de vandalisme de l'équipement fournisseur de service 24, par exemple par arrachage du premier dispositif de lecture 60. Le dispositif anti-vandalisme 75 est également configuré pour activer le dispositif de détermination 68 et l'organe de mise en oeuvre de mesures anti-fraude 76 lorsqu'une tentative de vandalisme de l'équipement fournisseur de service 24 est détectée.

L'organe de mise en oeuvre de mesures anti-fraude 76 est configuré pour bloquer la fourniture du service au véhicule 12 ; à cet effet, l'organe de mise en oeuvre de mesures anti-fraude 76 est configuré pour désactiver le dispositif de fourniture de service 64 lorsqu'il est activé. L'organe de mise en oeuvre de mesures anti-fraude 76 est également configuré pour immobiliser le véhicule 12 ; à cet effet, l'organe de mise en oeuvre de mesures anti-fraude 76 est configuré pour transmettre une instruction d'immobilisation du véhicule 12 à l'ordinateur de bord du véhicule 12 au moyen du deuxième dispositif de lecture 62. L'organe de mise en oeuvre de mesures anti-fraude 76 est en outre configuré pour inscrire les identifiants d'utilisateur et de véhicule portés respectivement par les premier et deuxième supports de données 20, 22 dans la liste d'exclusion de l'organe de vérification 70 de chaque équipement fournisseur de service 24. De manière avantageuse, l'organe de mise en oeuvre de mesures anti-fraude 76 est encore adapté pour transmettre au serveur central 26 la localisation de l'équipement fournisseur d'énergie 24.

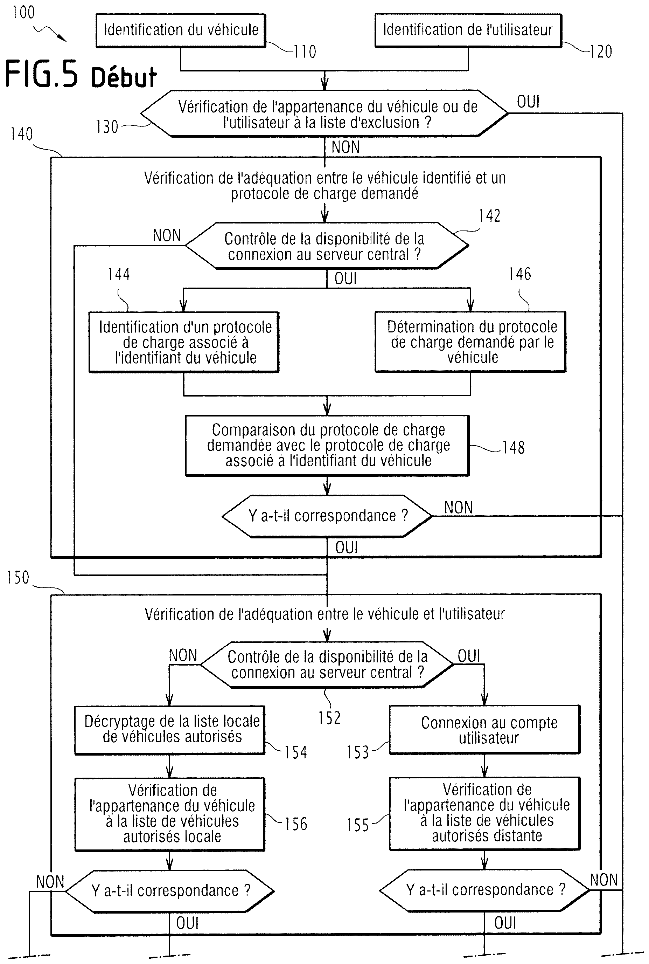

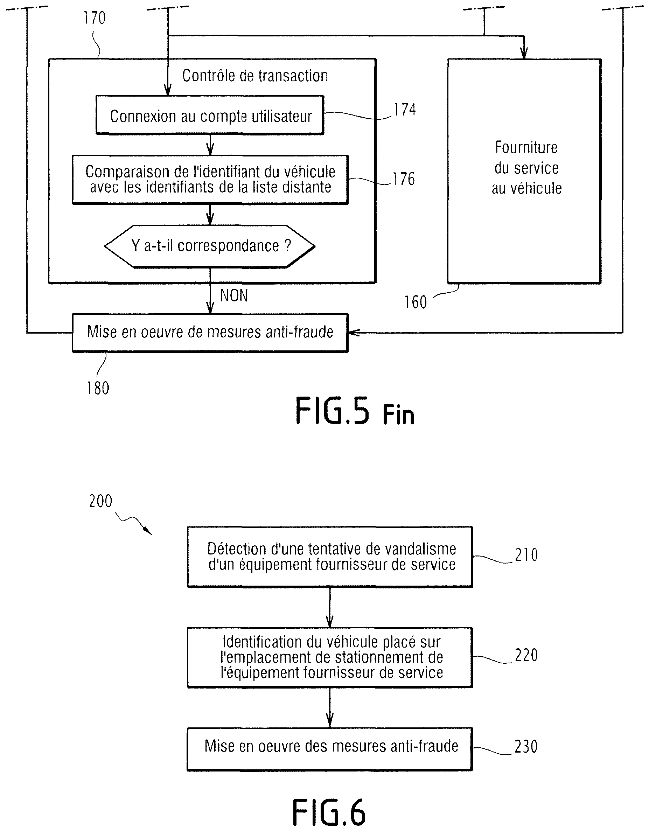

Un procédé de fourniture de service 100 mis en oeuvre par le système 10 va maintenant être décrit, en référence à la Figure 5.

Le véhicule 12 est tout d'abord conduit à proximité de l'un des équipements fournisseurs de service 24 du système 10, en un emplacement (non représenté), par exemple un emplacement de stationnement, adapté pour que le deuxième dispositif de lecture 62 puisse lire le deuxième support de données 22 lorsque le véhicule 12 occupe cet emplacement. Le dispositif 66 de détermination de l'identité du véhicule 12 entre alors en communication avec le deuxième support de données 22 et détermine l'identité du véhicule 12 au moyen de l'identifiant de véhicule 45 au cours d'une étape 110 d'identification du véhicule 12 auprès de l'équipement fournisseur de service 24.

Sensiblement simultanément à l'étape 110 d'identification du véhicule 12, ou bien avant ou après cette étape 110, l'utilisateur 14 approche le premier support de données 20 de l'équipement fournisseur de service 24 auprès duquel est disposé le véhicule 12 de sorte que le premier dispositif de lecture 60 puisse lire le premier support de données 20. Le dispositif 68 de détermination de l'identité de l'utilisateur 14 entre alors en communication avec le premier support de données 20 et détermine l'identité de l'utilisateur 14 au moyen de l'identifiant d'utilisateur 27 porté par le premier support de données 20 au cours d'une étape 120 d'identification de l'utilisateur 14 auprès de l'équipement fournisseur de service 24.

Ensuite, lors d'une première étape de vérification 130, l'organe de vérification 70 vérifie l'appartenance de l'identifiant de véhicule 45 et de l'identifiant d'utilisateur 27 à la liste d'exclusion. A cet effet, l'organe de vérification 70 compare les identifiants d'utilisateur 27 et de véhicule 45 portés respectivement par les premier et deuxième supports de données 20, 22 avec le ou chaque identifiant exclu contenu dans la liste d'exclusion. Dans le cas où au moins un des identifiants d'utilisateur et de véhicule 27, 45 correspond à l'un des identifiants exclus, l'organe de vérification 70 conclut à l'appartenance dudit identifiant d'utilisateur ou de véhicule 27, 45 à la liste d'exclusion et active l'organe de mise en oeuvre de mesures anti-fraude 76, de sorte que l'étape 130 est suivie d'une étape 180 de mise en oeuvre de mesures anti-fraude. Dans le cas où les identifiants d'utilisateur et de véhicule sont tous deux différents de tous les identifiants exclus, l'organe de vérification 70 conclut à l'absence desdits identifiants d'utilisateur et de véhicule 27, 45 de la liste d'exclusion et active le dispositif de vérification 71, de sorte que l'étape 130 est suivie d'une deuxième étape de vérification 140.

La deuxième étape de vérification 140 consiste en une étape de vérification de l'adéquation entre un protocole de charge demandé par le véhicule 12 et l'identifiant de véhicule 45.

Cette étape 140 comprend une première sous-étape 142 de contrôle de la disponibilité de la connexion entre l'équipement fournisseur de service 24 et le serveur distant 26 par le dispositif de vérification 71. Au cours de cette première sous-étape 142, le dispositif de vérification 71 tente d'établir une communication avec le serveur distant 26 et, en cas de réussite, conclut à la disponibilité de la connexion et, en cas d'échec, conclut à l'indisponibilité de la connexion.

Cette première sous-étape 142 est suivie, lorsque la connexion est disponible, d'une sous-étape 144 d'identification d'un protocole de charge associé à l'identifiant de véhicule 45. Lorsque la connexion est indisponible, le dispositif de vérification 71 active le système de vérification 72, de sorte que la première sous-étape 142 est alors suivie d'une troisième étape de vérification 150.

Lors de la sous-étape d'identification d'un protocole de charge 144, le dispositif de vérification 71 cherche dans la mémoire 50 du serveur distant 26 une fiche véhicule 59 qui mentionne l'identifiant de véhicule 45, et consulte ladite fiche véhicule 59 pour lire le protocole associé par ladite fiche véhicule 59 à l'identifiant de véhicule 45.

Simultanément, préalablement ou ultérieurement à la sous-étape 144 se déroule une sous-étape 146 de détection d'un protocole de charge demandé par le véhicule 12, au cours de laquelle le dispositif de vérification 71 détecte le protocole de charge demandé par le véhicule 12 au moyen du dispositif de fourniture de service 64.

La sous-étape 146 est enfin suivie d'une dernière sous-étape 148 de comparaison du protocole de charge demandé par le véhicule 12 avec le protocole de charge associé à l'identifiant de véhicule 45. Lorsque le protocole de charge demandé par le véhicule 12 correspond au protocole de charge associé à l'identifiant de véhicule 45, le dispositif de vérification 71 conclut à l'adéquation du protocole de charge demandé avec l'identifiant de véhicule 45 et active le système de vérification 72, de sorte que la deuxième étape de vérification est alors suivie de la troisième étape de vérification 150. Lorsque le protocole de charge demandé par le véhicule 12 ne correspond pas au protocole de charge associé à l'identifiant de véhicule 45, le dispositif de vérification 71 conclut à l'inadéquation du protocole de charge demandé avec l'identifiant de véhicule 45 et active l'organe de mise en oeuvre de mesures anti-fraude 76, de sorte que l'étape 140 est alors suivie de l'étape 180 de mise en oeuvre de mesures anti-fraude.

La troisième étape de vérification 150 consiste en une étape de vérification de l'adéquation entre l'identifiant de véhicule 45 et l'identifiant d'utilisateur 27.

Cette étape 150 comprend une première sous-étape 152 de contrôle de la disponibilité de la connexion entre l'équipement fournisseur de service 24 et le serveur distant 26 par le système de vérification 72. Au cours de cette première sous-étape 152, le système de vérification 72 tente d'établir une communication avec le serveur distant 26 et, en cas de réussite, conclut à la disponibilité de la connexion et, en cas d'échec, conclut à l'indisponibilité de la connexion.

Cette première sous-étape 152 est suivie d'une sous-étape 153 de connexion du système de vérification 72 au compte utilisateur 36 désigné par l'adresse 34 portée par le premier support de données 20 lorsque la connexion est disponible, et d'une sous-étape 154 de déchiffrage de la liste de véhicules autorisés locale 30 portée par le premier support de données 20 au moyen de la clef publique 44 lorsque la connexion est indisponible.

La sous-étape de connexion 153 est suivie d'une sous-étape 155 de vérification de l'appartenance de l'identifiant de véhicule 45 à la liste de véhicules autorisés distante 57 du compte utilisateur 36. Au cours de cette sous-étape 155, le système de vérification compare l'identifiant de véhicule 45 avec le ou chaque identifiant autorisé 58 mentionné dans ladite liste de véhicules autorisés distante 57 ; dans le cas où l'identifiant de véhicule 45 correspond à l'un des identifiants autorisés distants 58, le système de vérification 72 conclut à l'appartenance dudit identifiant de véhicule 45 à la liste de véhicules autorisés distante 57 et, dans le cas où l'identifiant de véhicule 45 est différent de tous les identifiants autorisés distants 58, le système de vérification 72 conclut à l'absence de l'identifiant de véhicule 45 de la liste de véhicules autorisés distante 57.

En cas d'absence de l'identifiant de véhicule 45 de la liste de véhicules autorisés distante 57, le système de vérification 72 conclut à l'inadéquation entre les identifiants d'utilisateur et de véhicule portés respectivement par les premier et deuxième supports de données 20, 22. En cas d'appartenance de l'identifiant de véhicule 45 à la liste de véhicules autorisés distante 57, le système de vérification 72 conclut à l'adéquation entre les identifiants d'utilisateur et de véhicule portés respectivement par les premier et deuxième supports de données 20, 22.

La sous-étape de déchiffrage 154 est suivie d'une sous-étape 156 de vérification de l'appartenance de l'identifiant de véhicule 45 à la liste de véhicules autorisés locale 30. Au cours de cette sous-étape 156, le système de vérification compare l'identifiant de véhicule 45 avec le ou chaque identifiant autorisé 38 mentionné dans ladite liste de véhicules autorisés locale 30 ; dans le cas où l'identifiant de véhicule 45 correspond à l'un des identifiants autorisés locaux 38, le système de vérification 72 conclut à l'appartenance dudit identifiant de véhicule 45 à la liste de véhicules autorisés locale 30 et, dans le cas où l'identifiant de véhicule 45 est différent de tous les identifiants autorisés locaux 38, le système de vérification 72 conclut à l'absence de l'identifiant de véhicule 45 de la liste de véhicules autorisés locale 30.

En cas d'absence de l'identifiant de véhicule 45 de la liste de véhicules autorisés locale 30, le système de vérification 72 conclut à l'inadéquation entre les identifiants d'utilisateur et de véhicule portés respectivement par les premier et deuxième supports de données 20, 22. En cas d'appartenance de l'identifiant de véhicule 45 à la liste de véhicules autorisés locale 30, le système de vérification 72 conclut à l'adéquation entre les identifiants d'utilisateur et de véhicule portés respectivement par les premier et deuxième supports de données 20, 22.

En cas d'inadéquation entre les identifiants d'utilisateur et de véhicule, le système de vérification 72 active l'organe de mise en oeuvre de mesures anti-fraude 76, de sorte que l'étape de vérification 150 est suivie de l'étape de mise en oeuvre de mesures anti-fraude 180. En cas d'adéquation entre les identifiants d'utilisateur et de véhicule, le système de vérification 72 active le dispositif de fourniture de service 64, de sorte que l'étape de vérification 150 est suivie d'une étape 160 de fourniture du service au véhicule 12. En cas d'adéquation entre les identifiants d'utilisateur et de véhicule alors que la connexion au serveur distant 26 est indisponible, le système de vérification 72 active le système de contrôle de transaction 74, de sorte que l'étape 150 est également suivie d'une étape 170 de contrôle de transaction.

Lors de l'étape de fourniture de service 160, le dispositif de fourniture de service 64 fournit le service au véhicule 12. Lorsque le service a été fourni au véhicule 12, le dispositif de fourniture de service 64 se désactive et il est mis fin au procédé 100.

L'étape de contrôle de transaction 170 est ultérieure à l'étape de fourniture de service 160. Elle comprend une première sous-étape 174 de connexion au compte utilisateur 36 désigné par l'adresse 34 qui est mise en oeuvre dès que la connexion entre l'équipement fournisseur d'énergie 24 et le serveur distant 26 est rétablie. Cette première sous-étape 174 est suivie d'une deuxième sous-étape 176 de vérification de l'appartenance du véhicule 12 à la liste de véhicules autorisés distante 57 dudit compte utilisateur 36 ; au cours de cette deuxième sous-étape 176, le système de contrôle de transaction 74 compare l'identifiant de véhicule 45 avec chacun des identifiants autorisés 58 mentionnés dans la liste de véhicules autorisés distante 57 du compte utilisateur 36, et conclut à l'appartenance de l'identifiant de véhicule 45 à la liste de véhicules autorisés distante 57 dans le cas où l'identifiant de véhicule 45 correspond à l'un des identifiants autorisés distants 58, et à l'absence de l'identifiant de véhicule 45 de la liste de véhicules autorisés distante 57 dans le cas où l'identifiant de véhicule 45 est différent de tous les identifiants autorisés distants 58.

En cas d'appartenance de l'identifiant de véhicule 45 à la liste de véhicules autorisés distante 57, le système de contrôle 74 conclut à l'absence de fraude dans la transaction de fourniture d'énergie effectuée, et met alors fin au procédé 100.

En cas d'absence de l'identifiant de véhicule 45 de la liste de véhicules autorisés distante 57, le système de contrôle 74 conclut à l'existence d'une fraude dans la transaction de fourniture d'énergie effectuée, et active en conséquence l'organe de mise en oeuvre de mesures anti-fraude 76, de sorte que l'étape de contrôle 170 est suivie de l'étape de mise en oeuvre de mesures anti-fraude 180.

Lors de l'étape 180, l'organe de mise en oeuvre de mesures anti-fraude 76 met en oeuvre des mesures anti-fraude. Ces mesures incluent le blocage de la fourniture du service au véhicule 12 ; à cet effet, l'organe de mise en oeuvre de mesures anti-fraude 76 désactive le dispositif de fourniture de service 64. De préférence, les mesures anti-fraude 76 incluent également l'immobilisation du véhicule 12 ; à cet effet, l'organe de mise en oeuvre de mesures anti-fraude 76 transmet une instruction d'immobilisation du véhicule 12 à l'ordinateur de bord du véhicule 12 au moyen du deuxième dispositif de lecture 62.

Les mesures anti-fraude 76 incluent en outre l'inscription des identifiants d'utilisateur et de véhicule portés respectivement par les premier et deuxième supports de données 20, 22 dans la liste d'exclusion de l'organe de vérification 70 de chaque équipement fournisseur de service 24. De manière avantageuse, les mesures anti-fraude comprennent encore la transmission au serveur central 26 de la localisation de l'équipement fournisseur d'énergie 24.

Lorsque les mesures anti-fraude ont été mises en oeuvre, il est mis fin au procédé 100.

Un procédé anti-vandalisme 200 mis en oeuvre par le système 10 en cas de vandalisme d'un équipement fournisseur d'énergie 24 va maintenant être décrit, en référence à la Figure 6.

Ce procédé 200 comprend une première étape 210 de détection d'une tentative de vandalisme de l'équipement fournisseur de service 24 par le dispositif anti-vandalisme 75. Cette tentative de vandalisme consiste par exemple en l'arrachage du premier dispositif de lecture 60 et est détectée par le dispositif anti-vandalisme 75 suite à l'arrêt de l'émission par le premier dispositif de lecture 60 d'un signal de fonctionnement.

Suite à cette détection d'une tentative de vandalisme, le dispositif anti-vandalisme 75 active le dispositif de détermination 68 et l'organe de mise en oeuvre de mesures anti-fraude 76, de sorte que l'étape de détection 210 est suivie d'une étape 220 de détermination de l'identité du véhicule 12 placé sur l'emplacement de stationnement de l'équipement fournisseur de service 24 et d'une étape 230 de mise en oeuvre de mesures anti-fraude.

Au cours de l'étape 220, le dispositif 66 de détermination de l'identité du véhicule 12 entre en communication avec le deuxième support de données 22 et détermine l'identité du véhicule 12 au moyen de l'identifiant de véhicule 45.

Au cours de l'étape 230, l'organe de mise en oeuvre de mesures anti-fraude 76 met en oeuvre des mesures anti-fraude, lesdites mesures anti-fraude 76 incluant l'inscription de l'identifiant de véhicule 45 dans la liste d'exclusion de l'organe de vérification 70 de chaque équipement fournisseur de service 24. Lesdites mesures anti-fraude 76 incluent également l'immobilisation du véhicule 12 ; à cet effet, l'organe de mise en oeuvre de mesures anti-fraude 76 transmet une instruction d'immobilisation du véhicule 12 à l'ordinateur de bord du véhicule 12 au moyen du deuxième dispositif de lecture 62. De manière avantageuse, les mesures anti-fraude comprennent encore la transmission au serveur central 26 de la localisation de l'équipement fournisseur d'énergie 24.

Lorsque les mesures anti-fraude ont été mises en oeuvre, il est mis fin au procédé 200.

Grâce à l'invention décrite ci-dessus, les risques de fraude sont réduits.

Il est en effet impossible à un fraudeur d'utiliser un duplicata de support de données pour faire facturer au propriétaire du support de données original le rechargement d'un véhicule du fraudeur, puisque le système 10 détectera que ledit véhicule n'appartient pas à la liste de véhicules autorisés pour le support de données dupliqué.

Il est également impossible à un voleur de véhicule de recharger un véhicule volé au moyen de son propre identifiant utilisateur, puisque le système 10 détectera que ledit véhicule n'appartient pas à la liste de véhicules autorisés pour cet utilisateur.

Un particulier salarié bénéficiant d'un prêt de véhicule par son entreprise sera lui aussi dans l'impossibilité d'utiliser son identifiant d'utilisateur destiné au rechargement du véhicule d'entreprise qui lui est prêté pour demander le rechargement de son véhicule privé, puisque le système 10 détectera que ledit véhicule n'appartient pas à la liste de véhicules autorisés pour cet identifiant d'utilisateur.

Une fraude par substitution d'identifiant de véhicule, dans laquelle un fraudeur tenterait de recharger un véhicule en lui ayant remplacé son identifiant de véhicule par un identifiant de véhicule associé au compte d'utilisateur du fraudeur, est également empêchée, puisque le système 10 détectera que le protocole de charge n'est pas cohérent avec l'identifiant de véhicule.

Par ailleurs, dans l'hypothèse où les protections mentionnées plus haut seraient contournées par piratage d'un compte utilisateur, le pirate inscrivant à l'insu du propriétaire du compte un véhicule supplémentaire dans la liste de véhicules autorisés par ce compte, il sera facile au propriétaire légitime de détecter la fraude et de prouver que le véhicule ne lui appartient pas.

Enfin, le vol d'énergie par vandalisme d'un équipement fournisseur de service 24 est rendu plus difficile puisque l'équipement fournisseur de service 24 pourra tenter d'immobiliser le véhicule 12, et que le véhicule 12 sera identifié comme véhicule fraudeur par tous les autres équipements fournisseurs de service 24 du système 10.

## Revendications

1. Procédé (100) de fourniture d'un service par un équipement fournisseur de service (24) appartenant à un système de fourniture de service (10) à un véhicule (12) receveur dudit service, sous l'injonction d'un utilisateur (14) du service, l'équipement fournisseur de service (24) comprenant un organe (76) de mise en oeuvre des mesures anti-fraude, un premier dispositif de lecture (60), un deuxième dispositif de lecture (62) et un dispositif anti-vandalisme (75), le système de fourniture de service (10) comprenant une pluralité d'équipements fournisseurs de service (24), **caractérisé en ce que** le procédé (100) comprend les étapes suivantes :
- identification (110) du véhicule receveur (12) auprès de l'équipement fournisseur de service (24) au moyen d'un identifiant de véhicule (45) du véhicule receveur (12), l'identifiant du véhicule (45) étant lu sur un deuxième support de données (22) au moyen du deuxième dispositif de lecture (62),
- identification (120) de l'utilisateur (14) auprès de l'équipement fournisseur de service (24) au moyen d'un identifiant d'utilisateur (27), l'identifiant d'utilisateur étant lu sur un premier support de données (20) au moyen du premier dispositif de lecture (60),
- comparaison (130) de l'identifiant de véhicule (45) et/ou de l'identifiant d'utilisateur (27) avec une liste d'identifiants exclus stockée par un organe de vérification (70) de l'équipement fournisseur de service (24),
- dans le cas où l'identifiant de véhicule (45) et/ou l'identifiant d'utilisateur (27) est présent dans la liste d'identifiants exclus, mise en oeuvre de mesures anti-fraude (180) incluant la transmission d'une instruction d'immobilisation du véhicule (12) à un ordinateur de bord du véhicule (12) au moyen du deuxième dispositif de lecture (62), par l'organe (76) de mise en oeuvre de mesures anti-fraude,
- dans le cas où l'identifiant de véhicule (45) et/ou l'identifiant d'utilisateur (27) est absent de la liste d'identifiants exclus, vérification (150) de l'adéquation entre l'identifiant de véhicule (45) du véhicule receveur (12) et l'identifiant d'utilisateur (27),
- en cas d'adéquation entre l'identifiant de véhicule (45) du véhicule receveur (12) et l'identifiant d'utilisateur (27), fourniture (160) du service au véhicule receveur (12) par l'équipement fournisseur de service (24), et
- en cas d'inadéquation entre l'identifiant de véhicule (45) du véhicule receveur (12) et l'identifiant d'utilisateur (27), mise en oeuvre des mesures anti-fraude (180),
le procédé (100) comprenant en outre les étapes successives suivantes :
- détection (210) d'une tentative de vandalisme de l'équipement fournisseur de service (24), le dispositif anti-vandalisme (75) détectant une tentative de vandalisme suite à l'arrêt de l'émission par le premier dispositif de lecture (60) d'un signal de fonctionnement, et
lorsqu'une tentative de vandalisme de l'équipement fournisseur de service (24) est détectée :
- détermination (220) de l'identité du véhicule placé sur un emplacement de stationnement de l'équipement fournisseur de service (24) au moyen de l'identifiant du véhicule (45), et
- mise en oeuvre (230) de mesures anti-fraude par l'organe (76) de mise en oeuvre de mesures anti-fraude, lesdites mesures anti-fraude incluant l'inscription d'un identifiant de véhicule du véhicule dans la liste d'exclusion de l'organe de vérification (70) de chaque équipement fournisseur de service (24) du système de fourniture de service (10).

2. Procédé de fourniture de service (100) selon la revendication 1, dans lequel l'identifiant de véhicule (45) est un identifiant unique du véhicule receveur (12).

3. Procédé de fourniture de service (100) selon la revendication 1 ou 2, dans lequel :
- dans le premier support de données (20) sont mémorisés :
∘ une liste locale de véhicules autorisés (30), chiffrée au moyen d'une clé privée (40), et
∘ un certificat (32) permettant au premier support de données (20) de s'authentifier auprès de l'équipement fournisseur de service (24), ledit certificat (32) comprenant une clé publique (44) permettant le déchiffrage de la liste locale de véhicules autorisés (30),
- l'étape (120) d'identification de l'utilisateur (14) auprès de l'équipement fournisseur de service (24) comprend les sous-étapes suivantes :
∘ authentification du premier support de données (20) auprès de l'équipement fournisseur de service (24) au moyen du certificat (32), et
∘ lecture, par l'équipement fournisseur de service (24), de l'identifiant d'utilisateur (27) porté par le premier support de données (20), et
- l'étape (150) de vérification de l'adéquation entre l'identifiant de véhicule (45) et l'identifiant d'utilisateur (27) comprend les sous-étapes suivantes :
∘ déchiffrage (154), au moyen de la clé publique (44), de la liste locale de véhicules autorisés (30), et
∘ vérification (156) de l'appartenance de l'identifiant de véhicule (45) du véhicule receveur (12) à la liste locale de véhicules autorisés (30).

4. Procédé de fourniture de service (100) selon la revendication 3, comprenant une étape supplémentaire de contrôle de transaction (170), ultérieure à l'étape de fourniture de service (160), ladite étape de contrôle de transaction (170) comportant les sous-étapes suivantes :
- connexion (172) de l'équipement fournisseur de service (24) à un compte utilisateur (36) stocké sur un serveur distant (26) au moyen d'une adresse (34) mémorisée sur le premier support de données (20),
- lecture d'une liste distante de véhicules autorisés (57) mémorisée dans ledit compte utilisateur (36),
- vérification (176) de l'appartenance de l'identifiant de véhicule (45) du véhicule receveur (12) à la liste distante de véhicules autorisés (57), et
- dans le cas où l'identifiant de véhicule (45) du véhicule receveur (12) est absent de la liste distante de véhicules autorisés (57), mise en oeuvre de mesures anti-fraude (180).

5. Procédé de fourniture de service (100) selon la revendication 3, dans lequel l'étape (150) de vérification de l'adéquation entre l'identifiant de véhicule (45) et l'identifiant d'utilisateur (27) comprend, préalablement à l'étape (154) de déchiffrage de la liste locale de véhicules autorisés (30), une étape (152) de vérification de l'état d'une connexion entre l'équipement fournisseur de service (24) et le serveur distant (26), suivie de :
- dans le cas où la connexion est disponible :
∘ connexion (153) de l'équipement fournisseur de service (24) à un compte utilisateur (36) stocké sur un serveur distant (26) au moyen d'une adresse (34) mémorisée sur le premier support de données (20),
∘ lecture d'une liste distante de véhicules autorisés (57) comprise dans ledit compte utilisateur (36), et
∘ vérification (155) de l'appartenance de l'identifiant de véhicule (45) du véhicule receveur (12) à la liste distante de véhicules autorisés (57),
- dans le cas où la connexion est indisponible, la mise en oeuvre des étapes de déchiffrage (154) de la liste locale de véhicules autorisés (30) et de vérification (156) de l'appartenance de l'identifiant de véhicule (45) du véhicule receveur (12) à la liste locale de véhicules autorisés (30).

6. Procédé de fourniture de service (100) selon la revendication 5, dans lequel, dans le cas où la connexion entre l'équipement fournisseur de service (24) et le serveur distant (26) est indisponible au moment de la mise en oeuvre de l'étape (150) de vérification de l'adéquation entre l'identifiant de véhicule (45) et l'identifiant d'utilisateur (27), le procédé comprend une étape supplémentaire (170) de contrôle de transaction, ultérieure à l'étape de fourniture de service (160), ladite étape de contrôle de transaction (170) comportant les sous-étapes suivantes :
- connexion (172) de l'équipement fournisseur de service (24) au compte utilisateur (36) au moyen de l'adresse (34) mémorisée sur le premier support de données (20),
- lecture de la liste distante de véhicules autorisés (57),
- vérification de l'appartenance de l'identifiant de véhicule (45) du véhicule receveur (12) à la liste distante de véhicules autorisés (57), et
- dans le cas où l'identifiant de véhicule (45) du véhicule receveur (12) est absent de la liste distante de véhicule autorisé (57), mise en oeuvre de mesures anti-fraude (180).

7. Procédé de fourniture de service (100) selon l'une quelconque des revendications précédentes, dans lequel la mise en oeuvre de mesures anti-fraude (180) comprend l'inscription de l'identifiant d'utilisateur (27) et/ou de l'identifiant de véhicule (45) sur la liste d'identifiants exclus.

8. Procédé de fourniture de service (100) selon la revendication 6, comprenant, suite à l'étape de comparaison (130), une étape (140) de vérification de l'adéquation entre un protocole de charge demandé par le véhicule receveur (12) et l'identifiant de véhicule (45), ladite étape de vérification (140) comprenant une sous-étape (142) de vérification de la disponibilité d'une connexion entre l'équipement fournisseur de service (24) et le serveur distant (26), suivie:
- dans le cas où la connexion est disponible :
∘ d'une sous étape (144) d'identification d'un protocole de charge associé à l'identifiant de véhicule (45) ;
∘ d'une sous étape (146) de détection d'un protocole de charge demandé par le véhicule (12) ;
∘ d'une sous étape (148) de comparaison du protocole de charge demandé par le véhicule (12) avec le protocole de charge associé à l'identifiant de véhicule (45) ; et
lorsque le protocole de charge demandé par le véhicule (12) correspond au protocole de charge associé à l'identifiant de véhicule (45), de l'étape (150) de vérification de l'adéquation entre l'identifiant de véhicule (45) du véhicule receveur (12) et l'identifiant d'utilisateur (27) ; et
lorsque le protocole de charge demandé par le véhicule (12) ne correspond pas au protocole de charge associé à l'identifiant de véhicule (45), de l'étape (180) de mise en oeuvre de mesures anti-fraude (180) ; et
- dans le cas où la connexion est indisponible, de l'étape (150) de vérification de l'adéquation entre l'identifiant de véhicule (45) du véhicule receveur (12) et l'identifiant d'utilisateur (27).

9. Système de fourniture de service (10) pour la fourniture d'un service à un véhicule (12) receveur dudit service, sous l'injonction d'un utilisateur (14) du service, le système (10) comprenant un premier support de données (20), un deuxième support de données (22) et une pluralité d'équipements fournisseur de service (24) pour la fourniture du service au véhicule receveur (12), chaque équipement fournisseur de service comprenant un premier dispositif de lecture (60) pour lire le premier support de données (20), un deuxième dispositif de lecture (62) pour lire le deuxième support de données (22), un dispositif anti-vandalisme (75) et un organe (76) de mise en oeuvre des mesures anti-fraude, **caractérisé en ce que** chaque équipement fournisseur de service (24) comprend :
- un dispositif (68) de détermination d'une identité du véhicule receveur (12) au moyen d'un identifiant de véhicule (45) du véhicule receveur (12), adapté pour lire un identifiant de véhicule porté sur le deuxième support de données (22) au moyen du deuxième dispositif de lecture (62),
- un dispositif (66) de détermination d'une identité de l'utilisateur (14) au moyen d'un identifiant d'utilisateur (27), adapté pour lire un identifiant d'utilisateur(27) porté sur le premier support de données (20) au moyen du premier dispositif de lecture (60),
- un organe de vérification (70) stockant une liste d'exclusion contenant au moins un identifiant exclu et configuré pour comparer l'identifiant d'utilisateur (27) et l'identifiant de véhicule (45) avec le ou chaque identifiant exclu et pour commander la mise en oeuvre de mesures anti-fraude en cas de correspondance de l'identifiant d'utilisateur (27) (14) et/ou de l'identifiant de véhicule (45) du véhicule receveur (12) avec un identifiant exclu, l'organe de mise en oeuvre de mesures anti-fraude (76) étant configuré pour transmettre une instruction d'immobilisation du véhicule (12) à l'ordinateur de bord du véhicule (12) au moyen du deuxième dispositif de lecture (62) lors de la mise en oeuvre de mesures anti-fraude, et
- un dispositif anti-vandalisme (75) configuré pour détecter une tentative de vandalisme de l'équipement fournisseur de service (24) suite à l'arrêt de l'émission par le premier dispositif de lecture (60) d'un signal de fonctionnement, et, lorsqu'une tentative de vandalisme de l'équipement fournisseur de service (24) est détectée, activer le dispositif de détermination (68) d'une identité du véhicule receveur (12) pour déterminer l'identité du véhicule receveur (12) au moyen d'un identifiant de véhicule (45) du véhicule receveur (12), et commander la mise en oeuvre de mesures anti-fraude, dont l'inscription de l'identifiant de véhicule (45) du véhicule receveur (12) dans la liste d'exclusion de l'organe de vérification (70) de chaque équipement fournisseur de service (24),
et **en ce que** le système de fourniture de service (10) comprend un système (72) de vérification de l'adéquation entre l'identifiant de véhicule (45) du véhicule receveur (12) et l'identifiant d'utilisateur (27), adapté pour, dans le cas où l'identifiant de véhicule (45) et/ou l'identifiant d'utilisateur (27) est absent de la liste d'identifiants exclus, commander la fourniture du service au véhicule receveur (12) par l'équipement fournisseur de service (24) en cas d'adéquation des identités et pour commander la mise en oeuvre de mesures anti-fraude en cas d'inadéquation entre les identifiants.

10. Système de fourniture de service (10) selon la revendication 9, dans lequel l'identifiant de véhicule (45) est un identifiant unique du véhicule receveur (12).

11. Système de fourniture de service (10) selon la revendication 9 ou 10, dans lequel dans le premier support de données (20) sont mémorisés:
- une liste locale de véhicules autorisés (30), mentionnant au moins une identité de véhicule autorisé locale (38), chiffrée au moyen d'une clé privée (40), et
- un certificat (32) permettant au premier support de données (20) de s'authentifier auprès de l'équipement fournisseur de service (24), ledit certificat (32) comprenant une clé publique (44) permettant le déchiffrage de la liste locale de véhicules autorisés (30),
le dispositif (66) de détermination de l'identité de l'utilisateur (14) étant adapté pour lire le premier support de données (20) et pour déterminer l'identité de l'utilisateur (14) après authentification du premier support de données (20) auprès dudit dispositif de détermination (66) au moyen du certificat (32), et le système (74) de vérification de l'adéquation entre les identités du véhicule receveur (12) et de l'utilisateur (14) étant adapté pour déchiffrer, au moyen de la clé publique (44) contenue dans le certificat (32), la liste locale de véhicules autorisés (30), et vérifier la mention de l'identité du véhicule receveur (12) dans la liste locale de véhicules autorisés (30).

12. Système de fourniture de service (10) selon l'une quelconque des revendications 9 à 11, comprenant un serveur distant (26) sur lequel est stocké un compte utilisateur (36) comprenant une liste distante de véhicules autorisés (57), mentionnant au moins une identité de véhicule autorisé distante (58), le système (74) de vérification de l'adéquation entre les identités du véhicule receveur (12) et de l'utilisateur (14) étant adapté pour connecter l'équipement fournisseur de service (24) au compte utilisateur (36) sur le serveur distant (26) et vérifier la mention de l'identité du véhicule receveur (12) dans la liste distante de véhicules autorisés (57).

13. Système de fourniture de service (10) selon les revendications 11 et 12 prises ensemble, dans lequel le système (74) de vérification de l'adéquation entre les identités du véhicule receveur (12) et de l'utilisateur (14) est adapté pour ne vérifier la mention de l'identité du véhicule receveur (12) dans la liste locale de véhicules autorisés (30) que dans le cas où la connexion entre l'équipement fournisseur de service (24) et le serveur distant (26) est indisponible.

14. Système de fourniture de service (10) selon l'une quelconque des revendications 12 à 13, comprenant un dispositif de vérification (71) de l'adéquation entre le véhicule (12) receveur et un protocole de charge demandé, configuré pour :
- contrôler la disponibilité de la connexion entre l'équipement fournisseur de service (24) et le serveur distant (26), et
- lorsque la connexion est disponible :
∘ identifier un protocole de charge associé à l'identité du véhicule receveur (12),
∘ détecter un protocole de charge demandé par le véhicule receveur (12),
∘ comparer ce protocole de charge demandé avec le protocole de charge associé à l'identité du véhicule receveur (12), et
∘ activer l'organe de mise en oeuvre de mesures anti-fraude (76) lorsque le protocole de charge demandé par le véhicule receveur (12) et le protocole de charge associé à l'identité du véhicule receveur (12) ne correspondent pas l'un à l'autre et activer le système de vérification (72) pour vérifier l'adéquation entre l'identifiant de véhicule (45) du véhicule receveur (12) et l'identifiant d'utilisateur (27) lorsque le protocole de charge demandé par le véhicule receveur (12) et le protocole de charge associé à l'identité du véhicule receveur (12) correspondent l'un à l'autre ; et
- lorsque la connexion est indisponible activer le système de vérification (72) pour vérifier l'adéquation entre l'identifiant de véhicule (45) du véhicule receveur (12) et l'identifiant d'utilisateur (27).

15. Procédé (100) ou système (10) de fourniture de service selon l'une quelconque des revendications précédentes, dans lequel la mise en oeuvre de mesures anti-fraude comprend le blocage de la fourniture du service au véhicule receveur (12).

16. Procédé (100) ou système (10) de fourniture de service selon l'une quelconque des revendications précédentes, dans lequel le service comprend la fourniture d'un accès du véhicule receveur (12) à un réseau routier et/ou le rechargement du véhicule receveur (12) avec une source d'énergie destinée à l'alimentation en énergie d'un moteur (18) du véhicule receveur (12).

## Patentansprüche

1. Verfahren (100) zum Bereitstellen eines Dienstes durch eine Dienstbereitstellungsausrüstung (24), die zu einem Dienstbereitstellungssystem (10) eines Fahrzeugs (12) gehört, das Empfänger des Dienstes ist, auf Anordnung eines Nutzers (14) des Dienstes, die Dienstbereitstellungsausrüstung (24) umfasst ein Element (76) zum Implementieren von Betrugsbekämpfungsmaßnahmen, eine erste Lesevorrichtung (60), eine zweite Lesevorrichtung (62) und eine Antivandalismus-Vorrichtung (75), das Dienstbereitstellungssystem (10) umfassend eine Vielzahl von Dienstbereitstellungsausrüstungen (24), **dadurch gekennzeichnet, dass** das Verfahren (100) die folgenden Schritte umfasst:
- Identifizieren (110) des empfangenden Fahrzeugs (12) bei der Dienstbereitstellungsausrüstung (24) mittels einer Fahrzeugkennung (45) des empfangenden Fahrzeugs (12), wobei die Fahrzeugkennung (45) von einem zweiten Datenträger (22) mittels der zweiten Lesevorrichtung (62) gelesen wird, Identifizieren (120) des Nutzers (14) bei der Dienstbereitstellungsausrüstung (24) mittels einer Nutzerkennung (27), wobei die Nutzerkennung mittels der ersten Lesevorrichtung (60) auf einem ersten Datenträger (20) gelesen wird,
- Vergleichen (130) der Fahrzeugkennung (45) und/oder der Nutzerkennung (27) mit einer Liste von ausgeschlossenen Kennungen, die von einem Überprüfungselement (70) der Dienstbereitstellungsausrüstung (24) gespeichert wird,
- in dem Fall, dass die Fahrzeugkennung (45) und/oder die Nutzerkennung (27) in der Liste der ausgeschlossenen Kennungen vorhanden ist, Implementieren von Betrugsbekämpfungsmaßnahmen (180), die das Übertragen einer Anweisung zur Immobilisierung des Fahrzeugs (12) beinhalten, an einen Bordcomputer des Fahrzeugs (12) mittels der zweiten Lesevorrichtung (62) durch das Element (76) zum Implementieren von Betrugsbekämpfungsmaßnahmen,
- in dem Fall, dass die Fahrzeugkennung (45) und/oder die Nutzerkennung (27) in der Liste der ausgeschlossenen Kennungen fehlt, Überprüfen (150), ob die Fahrzeugkennung (45) des empfangenden Fahrzeugs (12) und die Nutzerkennung (27) übereinstimmen,
- bei einer Übereinstimmung zwischen der Fahrzeugkennung (45) des empfangenden Fahrzeugs (12) und der Nutzerkennung (27), Bereitstellen (160) des Dienstes für das empfangende Fahrzeug (12) durch die Dienstbereitstellungsausrüstung (24); und
- bei einer Diskrepanz zwischen der Fahrzeugkennung (45) des empfangenden Fahrzeugs (12) und der Nutzerkennung (27), Implementieren von Betrugsbekämpfungsmaßnahmen (180),
das Verfahren (100) ferner umfassend die folgenden aufeinanderfolgenden Schritte:
- Erkennen (210) eines Vandalismusversuchs der Dienstbereitstellungsausrüstung (24), wobei die Antivandalismus-Vorrichtung (75) einen Vandalismusversuch erkennt, nachdem die erste Lesevorrichtung (60) die Ausgabe eines Betriebssignals angehalten hat, und
wenn ein Vandalismusversuch an der Dienstbereitstellungsausrüstung (24) erkannt wird:
- Bestimmen (220) der Identität des Fahrzeugs, das auf einem Parkplatz der Dienstbereitstellungsausrüstung (24) abgestellt ist, mittels der Fahrzeugkennung (45), und
- Implementieren (230) von Betrugsbekämpfungsmaßnahmen durch das Element (76) zum Implementieren von Betrugsbekämpfungsmaßnahmen, wobei die Betrugsbekämpfungsmaßnahmen das Eintragen einer Fahrzeugkennung des Fahrzeugs in die Ausschlussliste des Überprüfungselements (70) jeder Dienstbereitstellungsausrüstung (24) des Dienstbereitstellungssystems (10) beinhalten.

2. Dienstbereitstellungsverfahren (100) nach Anspruch 1, wobei die Fahrzeugkennung (45) eine eindeutige Kennung des empfangenden Fahrzeugs (12) ist.

3. Dienstbereitstellungsverfahren (100) nach Anspruch 1 oder 2, wobei:
- in dem ersten Datenträger (20) Folgendes gespeichert ist:
∘ eine lokale Liste zugelassener Fahrzeuge (30), die mit einem privaten Schlüssel (40) verschlüsselt ist, und
∘ ein Zertifikat (32), das es dem ersten Datenträger (20) ermöglicht, sich bei der Dienstbereitstellungsausrüstung (24) zu authentifizieren, wobei das Zertifikat (32) einen öffentlichen Schlüssel (44) umfasst, der die Entschlüsselung der lokalen Liste der autorisierten Fahrzeuge (30) ermöglicht,
- wobei der Schritt (120) eines Identifizierens des Nutzers (14) bei der Dienstbereitstellungsausrüstung (24) die folgenden Teilschritte umfasst:
∘ Authentifizieren des ersten Datenträgers (20) bei der Dienstbereitstellungsausrüstung (24) mittels des Zertifikats (32), und
∘ Lesen, durch die Dienstbereitstellungsausrüstung (24), der auf dem ersten Datenträger (20) getragenen Nutzerkennung (27), und
- wobei der Schritt (150) eines Überprüfens der Übereinstimmung zwischen der Fahrzeugkennung (45) und der Nutzerkennung (27) die folgenden Teilschritte umfasst:
∘ Entschlüsseln (154), unter Verwendung des öffentlichen Schlüssels (44), der lokalen Liste autorisierter Fahrzeuge (30), und
∘ Überprüfen (156), ob die Fahrzeugkennung (45) des empfangenden Fahrzeugs (12) zu der lokalen Liste autorisierter Fahrzeuge (30) gehört.

4. Dienstbereitstellungsverfahren (100) nach Anspruch 3, umfassend einen zusätzlichen Transaktionsprüfschritt (170), der auf den Schritt der Dienstbereitstellung (160) folgt, der Transaktionsprüfschritt (170) umfassend die folgenden Teilschritte:
- Verbinden (172) der Dienstbereitstellungsausrüstung (24) mit einem Nutzerkonto (36), das auf einem entfernten Server (26) gespeichert ist, mittels einer Adresse (34), die auf dem ersten Datenträger (20) gespeichert ist,
- Lesen einer entfernten Liste von zugelassenen Fahrzeugen (57), die in dem Nutzerkonto (36) gespeichert ist,
- Überprüfen (176), ob die Fahrzeugkennung (45) des empfangenden Fahrzeugs (12) zu der entfernten Liste autorisierter Fahrzeuge (57) gehört, und in dem Fall, dass die Fahrzeugkennung (45) des empfangenden Fahrzeugs (12) nicht in der entfernten Liste der autorisierten Fahrzeuge (57) enthalten ist, Implementieren von Betrugsbekämpfungsmaßnahmen (180).

5. Dienstbereitstellungsverfahren (100) nach Anspruch 3, wobei der Schritt (150) der Überprüfung der Übereinstimmung zwischen der Fahrzeugkennung (45) und der Nutzerkennung (27) vor dem Schritt (154) des Entschlüsselns der lokalen Liste autorisierter Fahrzeuge (30) einen Schritt (152) eines Überprüfens des Zustands einer Verbindung zwischen der Dienstbereitstellungsausrüstung (24) und dem entfernten Server (26), umfasst, gefolgt von:
- für den Fall, dass die Verbindung verfügbar ist:
- Verbinden (153) der Dienstbereitstellungsausrüstung (24) mit einem Nutzerkonto (36), das auf einem entfernten Server (26) gespeichert ist, mittels einer Adresse (34), die auf dem ersten Datenträger (20) gespeichert ist,
- Lesen einer entfernten Liste von zugelassenen Fahrzeugen (57), die in dem Nutzerkonto (36) enthalten ist, und
∘ Überprüfen (155), ob die Fahrzeugkennung (45) des empfangenden Fahrzeugs (12) zu der entfernten Liste autorisierter Fahrzeuge (57) gehört,
- in dem Fall, dass die Verbindung nicht verfügbar ist, Implementieren von Schritten zum Entschlüsseln (154) der lokalen Liste autorisierter Fahrzeuge (30) und eins Überprüfens (156) der Zugehörigkeit der Fahrzeugkennung (45) des empfangenden Fahrzeugs (12) zu der lokalen Liste autorisierter Fahrzeuge (30).

6. Dienstbereitstellungsverfahren (100) nach Anspruch 5, wobei in dem Fall, dass die Verbindung zwischen der Dienstbereitstellungsausrüstung (24) und dem entfernten Server (26) zum Zeitpunkt der Implementierung des Schritts (150) einer Überprüfung der Übereinstimmung zwischen der Fahrzeugkennung (45) und der Nutzerkennung (27) nicht verfügbar ist, das Verfahren einen zusätzlichen Schritt (170) der Transaktionsprüfung umfasst, der auf den Schritt der Dienstbereitstellung (160) folgt, wobei der Schritt der Transaktionsprüfung (170) die folgenden Teilschritte umfasst:
- Verbinden (172) der Dienstbereitstellungsausrüstung (24) mit dem Nutzerkonto (36) mittels der auf dem ersten Datenträger (20) gespeicherten Adresse (34),
- Lesen der entfernten Liste autorisierter Fahrzeuge (57), Überprüfen, ob die Fahrzeugkennung (45) des empfangenden Fahrzeugs (12) zu der entfernten Liste autorisierter Fahrzeuge (57) gehört, und
- in dem Fall, dass die Fahrzeugkennung (45) des empfangenden Fahrzeugs (12) in der entfernten Liste des autorisierten Fahrzeugs (57) nicht vorhanden ist, Implementieren von Betrugsbekämpfungsmaßnahmen (180).

7. Dienstbereitstellungsverfahren (100) nach einem der vorherigen Ansprüche, wobei das Implementieren von Betrugsbekämpfungsmaßnahmen (180) einen Eintragen der Nutzerkennung (27) und/oder der Fahrzeugkennung (45) in die Liste der ausgeschlossenen Kennungen umfasst.

8. Dienstbereitstellungsverfahren (100) nach Anspruch 6, umfassend nach dem Vergleichsschritt (130) einen Schritt (140) zur Überprüfung der Übereinstimmung zwischen einem von dem empfangenden Fahrzeug (12) angeforderten Ladeprotokoll und der Fahrzeugkennung (45), der Überprüfungsschritt (140) umfassend einen Teilschritt (142) zum Überprüfen der Verfügbarkeit einer Verbindung zwischen der Dienstbereitstellungsausrüstung (24) und dem entfernten Server (26), gefolgt von:
- für den Fall, dass die Verbindung verfügbar ist:
∘ einem Teilschritt (144) eines Identifizierens eines Ladeprotokolls, das mit der Fahrzeugkennung (45) assoziiert ist;
∘ einem Teilschritt (146) eines Erfassens eines von dem Fahrzeug (12) angeforderten Ladeprotokolls;
∘ einem Teilschritt (148) eines Vergleichens des von dem Fahrzeug (12) angeforderten Ladeprotokolls mit dem Ladeprotokoll, das mit der Fahrzeugkennung (45) assoziiert ist; und
- wenn das von dem Fahrzeug (12) angeforderte Ladeprotokoll mit dem Ladeprotokoll übereinstimmt, das der Fahrzeugkennung (45) assoziiert ist, dem Teilschritt (150) zum Überprüfen der Übereinstimmung zwischen der Fahrzeugkennung (45) des empfangenden Fahrzeugs (12) und der Nutzerkennung (27); und
- wenn das von dem Fahrzeug (12) angeforderte Ladeprotokoll nicht mit dem Ladeprotokoll übereinstimmt, das mit der Fahrzeugkennung (45) assoziiert ist, dem Schritt (180) eines Implementierens von Betrugsbekämpfungsmaßnahmen (180); und
- in dem Fall, dass die Verbindung nicht verfügbar ist, einem Schritt (150) eines Überprüfens der Übereinstimmung zwischen der Fahrzeugkennung (45) des empfangenden Fahrzeugs (12) und der Nutzerkennung (27).

9. Dienstbereitstellungssystem (10) zum Bereitstellen eines Dienstes für ein Fahrzeug (12), das Empfänger des Dienstes ist, auf Anforderung eines Nutzers (14) des Dienstes, das System (10) umfassend einen ersten Datenträger (20) und einen zweiten Datenträger (22) und eine Vielzahl von Dienstbereitstellungsausrüstungen (24) zum Bereitstellen des Dienstes für das empfangende Fahrzeug (12), jede Dienstbereitstellungsausrüstung (24) umfassend eine erste Lesevorrichtung (60) zum Lesen des ersten Datenträgers (20), eine zweite Lesevorrichtung (62) zum Lesen des zweiten Datenträgers (22), eine Antivandalismus-Vorrichtung (75) und ein Element (76) zum Implementieren von Betrugsbekämpfungsmaßnahmen, **dadurch gekennzeichnet, dass** jede Dienstbereitstellungsausrüstung (24) Folgendes umfasst:
- eine Vorrichtung (68) zum Bestimmen einer Identität des empfangenden Fahrzeugs (12) mittels einer Fahrzeugkennung (45) des empfangenden Fahrzeugs (12), die angepasst ist, um eine auf dem zweiten Datenträger (22) getragene Fahrzeugkennung mittels der zweiten Lesevorrichtung (62) zu lesen,
- eine Vorrichtung (66) zum Bestimmen einer Identität des Nutzers (14) mittels einer Nutzerkennung (27), die angepasst ist, um eine auf dem ersten Datenträger (20) getragene Nutzerkennung (27) mittels der ersten Lesevorrichtung (60) zu lesen,
- ein Überprüfungselement (70), das eine Ausschlussliste speichert, die mindestens eine ausgeschlossene Kennung enthält und konfiguriert ist, um die Nutzerkennung (27) und die Fahrzeugkennung (45) mit der oder jeder ausgeschlossenen Kennung zu vergleichen und die Implementierung von Betrugsbekämpfungsmaßnahmen zu befehlen, wenn die Nutzerkennung (27) (14) und/oder die Fahrzeugkennung (45) des empfangenden Fahrzeugs (12) mit der oder jeder ausgeschlossenen Kennung übereinstimmen, wobei das Element (76) zur Implementierung von Betrugsbekämpfungsmaßnahmen konfiguriert ist, um bei der Implementierung von Betrugsbekämpfungsmaßnahmen mittels der zweiten Lesevorrichtung (62) eine Anweisung zur Immobilisierung des Fahrzeugs (12) an den Bordcomputer des Fahrzeugs (12) zu senden, und
- eine Antivandalisvorrichtung (75), die konfiguriert ist, um einen Vandalismusversuch an der Dienstbereitstellungsausrüstung (24) zu erkennen, nachdem die Ausgabe eines ersten Betriebssignals durch die erste Lesevorrichtung (60) angehalten wurde, und, wenn ein versuchter Vandalismus der Dienstbereitstellungsausrüstung (24) erkannt wird, die Bestimmungsvorrichtung (68) der Identität des empfangenden Fahrzeugs (12) zu aktivieren, um die Identität des empfangenden Fahrzeugs (12) anhand einer Fahrzeugkennung (45) des empfangenden Fahrzeugs (12) zu bestimmen, und um die Implementierung von Betrugsbekämpfungsmaßnahmen zu befehlen, einschließlich des Eintragens der Fahrzeugkennung (45) des empfangenden Fahrzeugs (12) in die Ausschlussliste des Überprüfungselements (70) jeder Dienstbereitstellungsausrüstung (24),
- und dass das Dienstbereitstellungssystem (10) ein System (72) zum Überprüfen der Übereinstimmung zwischen der Fahrzeugkennung (45) des empfangenden Fahrzeugs (12) und der Nutzerkennung (27) umfasst, das angepasst ist, um in dem Fall, dass die Fahrzeugkennung (45) des empfangenden Fahrzeugs und die Nutzerkennung (27) nicht in der Liste ausgeschlossener Kennungen vorhanden ist, die Bereitstellung des Dienstes für das empfangende Fahrzeug (12) durch die Dienstbereitstellungsausrüstung (24) zu befehlen, wenn die Identitäten übereinstimmen, und die Implementierung von Betrugsbekämpfungsmaßnahmen zu befehlen, wenn die Kennungen nicht übereinstimmen.

10. Dienstbereitstellungssystem (10) nach Anspruch 9, wobei die Fahrzeugkennung (45) eine eindeutige Kennung des empfangenden Fahrzeugs (12) ist.

11. Dienstbereitstellungssystem (10) nach Anspruch 9 oder 10, wobei in dem ersten Datenträger (20) Folgendes gespeichert ist:
- eine lokale Liste autorisierter Fahrzeuge (30), die mindestens eine lokale Identität eines autorisierten Fahrzeugs (38) angibt, die mit einem privaten Schlüssel (40) verschlüsselt ist, und
- ein Zertifikat (32), das es dem ersten Datenträger (20) ermöglicht, sich bei der Dienstbereitstellungsausrüstung (24) zu authentifizieren, wobei das Zertifikat (32) einen öffentlichen Schlüssel (44) umfasst, der die Entschlüsselung der lokalen Liste der autorisierten Fahrzeuge (30) ermöglicht,
wobei die Vorrichtung (66) zur Bestimmung der Identität des Nutzers (14) angepasst ist, um den ersten Datenträger (20) zu lesen und die Identität des Nutzers (14) nach Authentifizieren des ersten Datenträgers (20) gegenüber der Bestimmungsvorrichtung (66) mittels des Zertifikats (32) zu bestimmen, und das System (74) zur Überprüfung der Übereinstimmung zwischen den Identitäten des empfangenden Fahrzeugs (12) und des Nutzers (14) angepasst ist, mittels des öffentlichen Schlüssels (44), der in dem Zertifikat (32) enthalten ist, die lokale Liste autorisierter Fahrzeuge (30) zu verschlüsseln und die Angabe der Identität des empfangenden Fahrzeugs (12) in der lokalen Liste autorisierter Fahrzeuge (30) zu überprüfen.

12. Dienstbereitstellungssystem (10) nach einem der Ansprüche 9 bis 11, umfassend einen entfernten Server (26), auf dem ein Nutzerkonto (36) gespeichert ist, umfassend eine entfernte Liste autorisierter Fahrzeuge (57), die mindestens eine entfernte Identität eines autorisierten Fahrzeugs (58) angibt, wobei das System (74) zur Überprüfung der Übereinstimmung zwischen den Identitäten des empfangenden Fahrzeugs (12) und des Nutzers (14) angepasst ist, um die Dienstanbieterausrüstung (24) mit dem Nutzerkonto (36) auf dem entfernten Server (26) zu verbinden und die Angabe der Identität des empfangenden Fahrzeugs (12) in der entfernten Liste autorisierter Fahrzeuge (57) zu überprüfen.

13. Dienstbereitstellungssystem (10) nach Anspruch 11 und 12 zusammengenommen, wobei das System (74) zur Überprüfung der Übereinstimmung zwischen den Identitäten des empfangenden Fahrzeugs (12) und des Nutzers (14) angepasst ist, um die Angabe der Identität des empfangenden Fahrzeugs (12) in der lokalen Liste autorisierter Fahrzeuge (30) nur dann zu überprüfen, wenn die Verbindung zwischen der Dienstanbieterausrüstung (24) und dem entfernten Server (26) nicht verfügbar ist.

14. Dienstbereitstellungssystem (10) nach einem der Ansprüche 12 bis 13, umfassend eine Überprüfungsvorrichtung (71) der Übereinstimmung zwischen dem empfangenden Fahrzeugs (12) und einem angeforderten Ladeprotokoll, das zu Folgendem konfiguriert ist:
- Kontrollieren der Verfügbarkeit der Verbindung zwischen der Dienstanbieterausrüstung (24) und dem entfernten Server (26), und
- wenn die Verbindung verfügbar ist:
∘ Identifizieren eines Ladeprotokolls, das mit der Identität des empfangenden Fahrzeugs (12) assoziiert ist,
∘ Erkennen eines Ladeprotokolls, das von dem empfangenden Fahrzeug (12) angefordert wird,
∘ Vergleichen dieses angeforderten Ladeprotokolls mit dem Ladeprotokoll, das mit der Identität des empfangenden Fahrzeugs (12) assoziiert ist, und
∘ Aktivieren des Elements zur Implementierung von Betrugsbekämpfungsmaßnahme (76), wenn das von dem empfangenden Fahrzeug (12) angeforderte Ladeprotokoll und das mit der Identität des Empfängerfahrzeugs (12) assoziierte Ladeprotokoll nicht übereinstimmen, und Aktivieren des Überprüfungssystems (72), um die Übereinstimmung zwischen der Fahrzeugkennung (45) des empfangenden Fahrzeugs (12) und der Nutzerkennung (27) zu überprüfen, wenn das durch das Empfängerfahrzeug (12) angeforderte Ladeprotokoll und das Ladeprotokoll, das mit der Identität des Empfängerfahrzeugs (12) assoziiert ist, miteinander übereinstimmen; und
- wenn die Verbindung nicht verfügbar ist, Aktivieren des Überprüfungssystem (72), um die Übereinstimmung zwischen der Fahrzeugkennung (45) des empfangenden Fahrzeugs (12) und der Nutzerkennung (27) zu überprüfen.

15. Verfahren (100) oder System (10) zum Bereitstellen eines Dienstes nach einem der vorherigen Ansprüche, wobei die Implementierung von Betrugsbekämpfungsmaßnahmen ein Sperren der Bereitstellung des Dienstes für das empfangende Fahrzeug (12) umfasst.

16. Verfahren (100) oder System (10) zum Bereitstellen eines Dienstes nach einem der vorherigen Ansprüche, wobei der Dienst ein Bereitstellen eines Zugangs des empfangenden Fahrzeugs (12) zu einem Straßennetz und/oder das Aufladen des empfangenden Fahrzeugs (12) mit einer Energiequelle zur Energieversorgung eines Motors (18) des empfangenden Fahrzeugs (12) umfasst.

## Claims

1. A method (100) of providing a service by service-providing equipment (24) belonging to a service-providing system (10) to a vehicle (12) receiving said service, under the instruction of a user (14) of the service, the service-providing equipment (24) comprising an anti-fraud device (76), **characterized in that** a first reading device (60), a second reading device (62) and an anti-vandalism device (75), the service providing system (10) comprising a plurality of service providing equipments (24), **characterised in that** the method (100) comprises the following steps:
- identification (110) of the receiving vehicle (12) to the service-providing equipment (24) by means of a vehicle identifier (45) of the receiving vehicle (12), the vehicle identifier (45) being read from a second data carrier (22) by means of the second reading device (62),
- identification (120) of the user (14) at the service-providing equipment (24) by means of a user identifier (27), the user identifier being read from a first data carrier (20) by means of the first reading device (60),
- comparison (130) of the vehicle identifier (45) and/or the user identifier (27) with a list of excluded identifiers stored by a verifier (70) of the service providing equipment (24),
- in the event that the vehicle identifier (45) and/or the user identifier (27) is present in the list of excluded identifiers, implementing anti-fraud measures (180) including transmitting an instruction to immobilise the vehicle (12) to an on-board computer of the vehicle (12) by means of the second reading device (62), by the anti-fraud measures implementer (76),
- in the event that the vehicle identifier (45) and/or the user identifier (27) is absent from the list of excluded identifiers, checking (150) that the vehicle identifier (45) of the receiving vehicle (12) matches the user identifier (27),
- if there is a match between the vehicle identifier (45) of the receiving vehicle (12) and the user identifier (27), provision (160) of the service to the receiving vehicle (12) by the service providing equipment (24), and
- in the event of a mismatch between the vehicle identifier (45) of the receiving vehicle (12) and the user identifier (27), implementation of anti-fraud measures (180),
the method (100) further comprising the following successive steps:
- detecting (210) an attempt to vandalise the service providing equipment (24), the anti-vandal device (75) detecting an attempt to vandalise as a result of the first reading device (60) ceasing to emit an operating signal, and
when an attempt to vandalise the service provider equipment (24) is detected:
- determining (220) the identity of the vehicle placed in a parking space of the service providing equipment (24) by means of the vehicle identifier (45), and
- implementation (230) of anti-fraud measures by the anti-fraud measures implementer (76), said anti-fraud measures including entering a vehicle identifier of the vehicle into the verifier's exclusion list (70) of each service providing equipment (24) of the service providing system (10).

2. The method of providing the service (100) of claim 1, wherein the vehicle identifier (45) is a unique identifier of the receiving vehicle (12).

3. A method of providing a service (100) according to claim 1 or 2, wherein:
- in the first data carrier (20) are stored:
∘ a local list of authorised vehicles (30), encrypted with a private key (40), and
∘ a certificate (32) enabling the first data carrier (20) to authenticate itself to the service provider equipment (24), said certificate (32) comprising a public key (44) enabling decryption of the local list of authorised vehicles (30),
- the step (120) of identifying the user (14) to the service providing equipment (24) comprises the following substeps:
∘ authentication of the first data carrier (20) to the service provider equipment (24) using the certificate (32), and
∘ reading, by the service provider equipment (24), of the user identifier (27) carried by the first data carrier (20), and
- the step (150) of checking the match between the vehicle identifier (45) and the user identifier (27) comprises the following substeps:
∘ decrypting (154), by means of the public key (44), the local list of authorised vehicles (30), and
∘ verification (156) that the vehicle identifier (45) of the receiving vehicle (12) belongs to the local list of authorised vehicles (30).

4. A method of providing a service (100) according to claim 3, comprising an additional transaction control step (170), subsequent to the service providing step (160), said transaction control step (170) including the following sub-steps:
- connection (172) of the service provider equipment (24) to a user account (36) stored on a remote server (26) by means of an address (34) stored on the first data carrier (20),
- reading a remote list of authorised vehicles (57) stored in said user account (36),
- checking (176) whether the vehicle identifier (45) of the receiving vehicle (12) belongs to the remote list of authorised vehicles (57), and in case the vehicle identifier (45) of the receiving vehicle (12) is absent from the remote list of authorised vehicles (57), implementing anti-fraud measures (180).

5. A method of providing a service (100) according to claim 3, wherein the step (150) of checking the match between the vehicle identifier (45) and the user identifier (27) comprises, prior to the step (154) of decrypting the local list of authorised vehicles (30), a step (152) of checking the status of a connection between the service provider equipment (24) and the remote server (26), followed by:
- if the connection is available:
∘ connecting (153) the service provider equipment (24) to a user account (36) stored on a remote server (26) by means of an address (34) stored on the first data carrier (20),
∘ reading a remote list of authorised vehicles (57) included in said user account (36), and
∘ verification (155) that the vehicle identifier (45) of the receiving vehicle (12) belongs to the remote list of authorised vehicles (57),
- in the event that the connection is unavailable, implementing the steps of decrypting (154) the local list of authorised vehicles (30) and verifying (156) the membership of the vehicle identifier (45) of the receiving vehicle (12) to the local list of authorised vehicles (30).

6. A method of providing a service (100) according to claim 5, wherein, in the event that the connection between the service providing equipment (24) and the remote server (26) is unavailable at the time of implementing the step (150) of checking the match between the vehicle identifier (45) and the user identifier (27) the method comprises an additional transaction checking step (170), subsequent to the service providing step (160), said transaction checking step (170) comprising the following sub-steps:
- connection (172) from the service provider equipment (24) to the user account (36) by means of the address (34) stored on the first data carrier (20),
- reading the remote list of authorised vehicles (57), checking that the vehicle identifier (45) of the receiving vehicle (12) belongs to the remote list of authorised vehicles (57), and
- in the event that the vehicle identifier (45) of the receiving vehicle (12) is missing from the remote authorised vehicle list (57), implementation of anti-fraud measures (180).

7. A method of providing a service (100) according to any one of the preceding claims, wherein implementing anti-fraud measures (180) comprises placing the user identifier (27) and/or the vehicle identifier (45) on the do not call list.

8. A method of providing the service (100) according to claim 6, comprising, following the comparison step (130), a step (140) of verifying the match between a charging protocol requested by the receiving vehicle (12) and the vehicle identifier (45), said verification step (140) comprising a substep (142) of verifying the availability of a connection between the service providing equipment (24) and the remote server (26), followed:
- if the connection is available:
∘ a substep (144) of identifying a charging protocol associated with the vehicle identifier (45);
∘ a substep (146) of detecting a charging protocol requested by the vehicle (12);
∘ a substep (148) of comparing the charging protocol requested by the vehicle (12) with the charging protocol associated with the vehicle identifier (45); and
- when the charging protocol requested by the vehicle (12) matches the charging protocol associated with the vehicle identifier (45), the step (150) of checking the match between the vehicle identifier (45) of the receiving vehicle (12) and the user identifier (27); and
- when the charging protocol requested by the vehicle (12) does not match the charging protocol associated with the vehicle identifier (45), the step (180) of implementing anti-fraud measures; and
- in the event that the connection is unavailable, the step (150) of checking the match between the vehicle identifier (45) of the receiving vehicle (12) and the user identifier (27).

9. A service providing system (10) for providing a service to a vehicle (12) receiving said service, at the direction of a user (14) of the service, the system (10) comprising a first data carrier (20), a second data carrier (22) and a plurality of service providing equipment (24) for providing the service to the receiving vehicle (12), each service providing equipment comprising a first reading device (60) for reading the first data carrier (20), a second reading device (62) for reading the second data carrier (22), an anti-tampering device (75) and an anti-fraud enforcer (76), **characterized in that** each service providing equipment (24) comprises:
- a device (68) for determining an identity of the receiving vehicle (12) by means of a vehicle identifier (45) of the receiving vehicle (12), adapted to read a vehicle identifier carried on the second data carrier (22) by means of the second reading device (62),
- a device (66) for determining an identity of the user (14) by means of a user identifier (27), adapted to read a user identifier (27) carried on the first data carrier (20) by means of the first reading device (60),
- a checker (70) storing an exclusion list containing at least one excluded identifier and configured to compare the user identifier (27) and the vehicle identifier (45) with the or each excluded identifier and to control the implementation of anti-fraud measures in the event of a match of the user identifier (27) (14) and/or the vehicle identifier (45) of the receiving vehicle (12) with an excluded identifier, the anti-fraud measures implementer (76) being configured to transmit an instruction to immobilise the vehicle (12) to the on-board computer of the vehicle (12) by means of the second reading device (62) when anti-fraud measures are implemented, and
- an anti-vandalism device (75) configured to detect an attempt to vandalise the service-providing equipment (24) as a result of the first reading device (60) ceasing to emit an operating signal, and, when an attempt to vandalise the service-providing equipment (24) is detected activating the device for determining (68) an identity of the receiving vehicle (12) to determine the identity of the receiving vehicle (12) by means of a vehicle identifier (45) of the receiving vehicle (12), and controlling the implementation of anti-fraud measures, including the entry of the vehicle identifier (45) of the receiving vehicle (12) in the exclusion list of the verification member (70) of each service-providing equipment (24),
- and **in that** the service providing system (10) comprises a system (72) for checking the match between the vehicle identifier (45) of the receiving vehicle (12) and the user identifier (27), adapted in the event that the vehicle identifier (45) and/or the user identifier (27) is absent from the list of excluded identifiers controlling the provision of the service to the receiving vehicle (12) by the service providing equipment (24) in the event of a match between the identities and to control the implementation of anti-fraud measures in the event of a mismatch between the identifiers.

10. The service delivery system (10) of claim 9, wherein the vehicle identifier (45) is a unique identifier of the receiving vehicle (12).

11. The service delivery system (10) according to claim 9 or 10, wherein in the first data carrier (20) are stored:
- a local list of authorised vehicles (30), including at least one local authorised vehicle identity (38), encrypted with a private key (40), and
- a certificate (32) enabling the first data carrier (20) to authenticate itself to the service providing equipment (24), said certificate (32) comprising a public key (44) enabling decryption of the local list of authorised vehicles (30),
the device (66) for determining the identity of the user (14) being adapted to read the first data carrier (20) and to determine the identity of the user (14) after authentication of the first data carrier (20) to said determining device (66) by means of the certificate (32), and the system (74) for verifying the matching of the identities between the identities of the receiving vehicle (12) and the user (14) being adapted to decrypt, by means of the public key (44) contained in the certificate (32), the local list of authorised vehicles (30), and to verify the entry of the identity of the receiving vehicle (12) in the local list of authorised vehicles (30).

12. A service delivery system (10) according to any one of claims 9 to 11, comprising a remote server (26) on which is stored a user account (36) comprising a remote authorised vehicle list (57), mentioning at least one remote authorised vehicle identity (58), the system of verification (74) of the match between the identities of the receiving vehicle (12) and the user (14) being adapted to connect the service provider equipment (24) to the user account (36) on the remote server (26) and checking for the identity of the receiving vehicle (12) in the remote authorised vehicle list (57).

13. A service providing system (10) according to claims 11 and 12 taken together, wherein the system (74) for checking the match between the identities of the receiving vehicle (12) and the user (14) is adapted to check the identity of the receiving vehicle (12) against the local list of authorised vehicles (30) only in the event that the connection between the service providing equipment (24) and the remote server (26) is unavailable.

14. The service provision system (10) according to any of claims 12 to 13, comprising a matching device (71) for checking the suitability of the receiving vehicle (12) with a requested charging protocol, configured to:
- monitor the availability of the connection between the service provider equipment (24) and the remote server (26), and
- when the connection is available:
∘ identify a charging protocol associated with the identity of the receiving vehicle (12),
∘ detect a charging protocol requested by the receiving vehicle (12),
∘ compare this requested charging protocol with the charging protocol associated with the identity of the receiving vehicle (12), and
∘ activating the anti-fraud enforcer (76) when the charging protocol requested by the receiving vehicle (12) and the charging protocol associated with the identity of the receiving vehicle (12) do not match each other and activating the verification system (72) to check the match between the vehicle identifier (45) of the receiving vehicle (12) and the user identifier (27) when the requested charging protocol does not match the user identifier (27) when the charging protocol requested by the receiving vehicle (12) and the charging protocol associated with the identity of the receiving vehicle (12) match each other; and
- when the connection is unavailable activating the verification system (72) to check the match between the vehicle identifier (45) of the receiving vehicle (12) and the user identifier (27).

15. A method (100) or system (10) of providing service according to any of the preceding claims, wherein the implementation of anti-fraud measures comprises blocking the provision of service to the receiving vehicle (12).

16. A method (100) or system (10) of providing a service according to any of the preceding claims, wherein the service comprises providing access for the receiving vehicle (12) to a road network and/or recharging the receiving vehicle (12) with an energy source for powering an engine (18) of the receiving vehicle (12).
